Europäisches Patentamt

European Patent Office

Office européen des brevets

(11) Publication number: **0 186 464 B1**

# EUROPEAN PATENT SPECIFICATION

(45) Date of publication of patent specification: **27.02.91**   (51) Int. Cl.⁵: **G06K 11/12**

(21) Application number: **85309314.4**

(22) Date of filing: **20.12.85**

(54) Electrographic touch sensor.

(30) Priority: **24.12.84 US 685348**

(43) Date of publication of application:
**02.07.86 Bulletin 86/27**

(45) Publication of the grant of the patent:
**27.02.91 Bulletin 91/09**

(84) Designated Contracting States:
**AT BE CH DE FR GB IT LI NL SE**

(56) References cited:
**EP-A- 0 089 295       EP-A- 0 112 554**
**WO-A-80/01762       US-A- 3 798 370**
**US-A- 4 353 552       US-A- 4 371 746**

(73) Proprietor: **ELOGRAPHICS, INC.**
**105 Randolph Road**
**Oak Ridge Tennessee 37830(US)**

(72) Inventor: **Gibson, William A.**
**2404 Gallaher Ferry Road**
**Knoxville Tennessee 37932(US)**
Inventor: **Talmage, John E., Jr.**
**129 Hendrix Drive**
**Oak Ridge Tennessee 37830(US)**

(74) Representative: **Benson, John Everett et al**
**Raychem Limited Intellectual Property Law**
**Department Faraday Road Dorcan**
**Swindon, Wiltshire SN3 5HH(GB)**

## Description

The present invention relates to devices for inputting or determining the coordinates of a location in a two-dimensional system, and more particularly to an electrographic touch sensor and a method whereby such points can be determined or selected with good linearity throughout an increased proportion of the area of the sensor.

There are many fields of technology where it is desirable to generate electrical signals that are proportional to some physical point in a two dimensional planar or non-planar coordinate system. For example, it is often desirable to accurately reconstruct graphs or other technical data representation, to store such data in computers, or to provide touch sensors and the like. A device which has come into use for this purpose is known as a electrographic sensor, wherein orthogonal electrical fields are produced, one in a X direction and one in a Y direction, in the coordinate system. Contact of the sensor at a specific location with a finger or other object causes the generation of a signal that is representative of the X and Y coordinates of that particular point.

Orthogonal X and Y electrical fields of the devices of this type have been generated by numerous types of systems. For example, parallel electrodes have been placed on opposite edges on two spaced apart sheets. The electrical field in one direction is generated in one sheet with a potential applied to the set of electrodes on that sheet, and the orthogonal field is generated in the second sheet in a similar manner. In another configuration, as illustrated in US-A-3798370, the orthogonal electrical fields are generated in a single sheet, with various configurations of electrodes along the edges of the sheet, with the potential applied to these electrodes in a proper time sequence. One group of single sheet sensors may utilize resistive-type electrodes in contrast to another group that utilizes diodes.

In the single sheet type apparatus using resistive electrodes, it is well recognized that equipotential lines generated by the electrodes in the centre of the sheet are generally straight parallel lines in each of the directions. However, as the perimeter of the sheet is approached, these equipotential lines deviate from the ideal by being non-parallel curved lines. The curvature, i.e, bow, is produced by the voltage drop in the resistive electrodes. If a high linearity device is desired, such can be achieved near the centre of the device, but not at the edge of the device because of these non-parallel bowed equipotential lines near the edge.

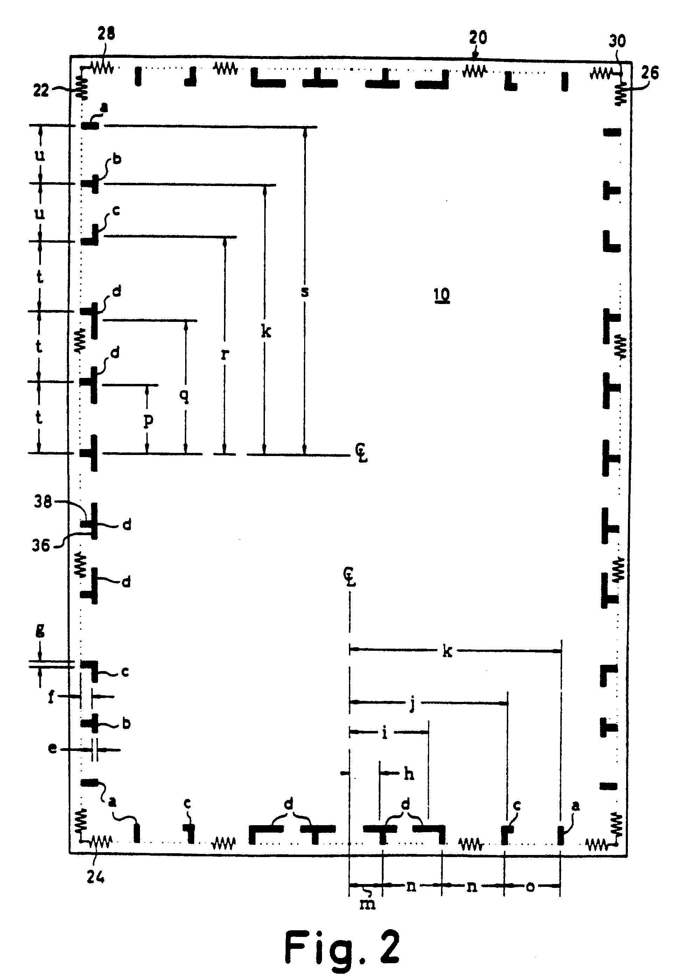

In order to achieve high linearity throughout a larger area of the device, many special systems of electrodes have been devised to increase the region of linearity of the instrument. For example, in U.S. Patent No. 3,798,370, issued to G S Hurst on 19 March 1974, and in EP-A-0089295, electrodes for the application of the voltage to the sheet are arranged in a curve or bow whereby the voltage drops in the resistive element along the edges of the device are at least partially compensated. This is discussed with reference to Figure 2 therein.

In a like manner, special electrode configurations are shown and described in U.S. Patent No. 4,079,194 issued to V. Kley on March 14, 1978; and in U.S. Patent No. 4,178,481 issued to the same inventor on December 11, 1979. In both of these patents special electrode configurations are used to reduce the bow to increase the effective area of a given sized sensor. Such configurations taught in these patents, however, are difficult to manufacture and are thus expensive to achieve.

Numerous sensors of this general type are utilized for use as an overlay to a video display such as a computer terminal in the form of a cathode ray tube. Such displays have outwardly curved (convex) edges. Using sensors of the prior art, with inwardly extending electrodes, or at least inwardly directed bowed fields on these display devices, the active area of a sensor is less than the potentially available area.

We have discovered an improved position touch sensor having resistive electrodes which provides a linear response over an enhanced proportion of the surface area of the sensor by reducing bow along edges of the sensor.

A first aspect of the invention provides a position touch sensor which comprises:

(i) a substrate;
(ii) a uniform resistive coating applied to and covering a substantial portion of the upper face of the substrate;
(ii) resistance elements positioned proximate each of the perimeter edges of the coating, for providing orthogonal fields to the resistive coating, each of the ends of the resistance elements being joined to proximate ends of the adjacent resistance elements, the resistance elements being insulated from the resistive coating; and
(iv) a plurality of electrodes
(a) positioned along a preselected path along each perimeter edge of the coating, and

(b) electrically attached to the coating, each of the electrodes being electrically connected to selected positions along the resistance elements and having a selected effective size and centre-to-centre spacing along the preselected path; characterised in that the selected spacing between adjacent electrodes (36) along each pre-selected path decreases from each end of the pre-selected path toward the centreline of the path so as to compensate for the voltage drop along the resistive elements(22, 24, 26, 28) during operation of the sensor when said orthogonal fields are applied to said coating (10).

The size and spacing of the electrodes along each resistor element compensates for the voltage drop along the resistive element. Without this compensation there would be a bow of the equipotential lines along the edges of the sensor, in which bowed region there would be a non-uniform response. The present invention advantageously reduces the size of that bow. Advantageously the compensation is arranged such that there is a substantially linear response over substantially the entire surface of the resistive coating.

Some specific advantages of the sensor according to the invention are now mentioned. The sensor may be manufactured such that it has a minimum area devoted to means for generating electrical fields therein. The sensor may be used over the screen of video display devices which results in an optimum utilization of the space thereof. A single sheet sensor may be made that can be inexpensively produced which will substantially reduce, or eliminate, the bow normally found in the prior art devices. Also the invention makes it possible to achieve a position sensitive device having increased positional accuracy (linearity) over a greater portion of a device of given size. This permits the fabrication of a smaller device for a given area of uniform sensitivity.

The uniform resistive coating on the substrate provides a sheet of resistive material having a highly uniform resistivity. This sheet may be either transparent or opaque. It may be formed using conventional technology. If the resultant product is to be an opaque sensor, the resistive coating is typically applied by screening a resistive ink, by spraying a resistive paint upon the substrate, or may be a volume conducting sheet such as rubber or plastic. The substrate for the opaque sensor can typically be rigid plastic, glass, various types of printed circuit boards material, or a metal having a previously applied insulating layer. Furthermore, various plastic materials can be utilized in the form of flexible sheets and supported upon a suitable hard surface material. In such opaque units, the resistive coating or sheet typically can have a sheet resistivity between about 10 and 10,000 ohms per square and be applied within a variation of uniformity of about two per cent and twenty-five per cent, depending upon the positional accuracy requirements of the device.

Alternatively, the resistance coating on the substrate can be substantially transparent. For such a device, the resistive layer is typically a semiconducting metal oxide as represented by indium-tin oxide. This type of coating and substrate are described in more detail in U.S. Patent 4,220,815 issued September 2, 1980, which patent is incorporated herein by reference. Typically, this resistive layer has the same range of resistivity as in the opaque sensor described above. The substrate for the transparent sensor is, accordingly, a transparent material such as glass.

Positioned along and adjacent to this sheet at each edge thereof is a substantially uniform resistive element by which potentials are applied to the sheet. The resistive element may be continuous, or be formed of discrete units connected in series. Actual contact between the resistive element and the sheet is provided with a single line of a plurality of contact electrodes connected to the resistive element along each edge. The electrodes are positioned along a preselected path along each perimeter edge of the resistive coating.

The preselected path is preferable symmetrical. The paths may be, for example, straight lines, or convex curves. The electrodes may be any suitable shape. Preferably the electrodes are rectangular. However, other configurations are possible, particularly if the electrodes are small.

The spacing (and preferably the size) of the contact electrodes is selected to provide a selected degree of linearity of the response throughout a major area of the device. In a particularly preferred embodiment, the effective voltage gradient along the path is selected to counteract the bow that otherwise would exist due to voltage drop along the resistive element. This may be achieved in a number of ways. The selected spacing between adjacent electrodes in each of the paths is arranged to decrease from each end of the path to the centre of the path. In addition the effective size of the electrodes in each of the paths may be arranged to increase from each end of the path towards the centre of the path. Preferably the selected effective size of the electrodes in each of the selected paths increases from about 0.15 cm (0.06 inch) at each end of the path to about 1.27 cm (.5 inch) at the centreline of the path, with said electrodes having a dimension perpendicular to the path of about 0.15 cm (0.06 inch). Preferably the selected centre-to-centre spacing of the electrodes in each of the pre-selected paths decreases from about 3.30 cm (1.3 inches) at each end of the path to about 2.03 cm (0.8 inch) at the centreline path. The size and spacing of the electrodes along each path is chosen so as to achieve varying effective voltage gradients in the resistive coating proximate the electrodes. The arrangement is preferably such that the effective voltage gradients in the coating decrease progressively from corners toward the centre of each path as the voltage drop increases along the resistive element. These effects (voltage gradient and voltage drop) are made to balance each other so that a substantially straight equipotential exists along a line defining the edges of the active region (having ± 0.1 in or better linearity) of the sensor. The voltage gradient differences obtained by this construction occur substantially in the area between the electrodes and the edge of the useable area; any projection into the useable area is significant to produce positional inaccuracies.

The effective voltage gradients are a function of the effective size (effective width facing active area) and spacing of the electrodes. If equal size electrodes are used, the spacing is greatest toward the corners and substantially less toward the centre of each edge. For fabrication simplicity, namely to reduce the number of connections to the resistive element electrodes can be lengthened toward the centre without significantly departing from the ideal. Preferably, the electrodes closest to the corners have a smaller length dimension, while those more removed from the corners have a longer dimension. Also, the spacing between electrodes is selected to achieve the desired effective voltage gradients, and thus the desired linear response in the operational area of the sensor. The spacing nearest the corners is the largest, with the spacing decreasing toward the centre line of each side.

The substrate may be any shape. It may be planar, for example, or contoured to match the face of a curved object, such as a conventional video display screen. The substrate may have any perimeter configuration. In one preferred embodiment, suitable for use on a video display screen, it has a perimeter to match the configuration of a video display screen. Such configurations include configurations that are "substantially rectangular".

In one preferred embodiment (a) the substrate is rectangular, having a first pair of opposite edges of a first dimension and a second pair of opposite edges of a second dimension at substantially right angles to said first pair of edges, (b) two pairs of resistance elements are provided with each of the first pair of resistance elements being positioned proximate respective ones of the first pair of opposite edges of the substrate, and each of the second pair of resistance elements being positioned proximate respective ones of the second pair of opposite edges of said substrate, adjacent ends of the pairs of resistance elements being joined to form a substantially rectangular array of resistance elements surrounding the resistive coating and (c) the plurality of electrodes comprises two pairs of electrode element groups each electrode element group of the first pair of electrode element group being positioned proximate respective ones of the first pair of opposite edges of the substrate, and each electrode element in the second pair of electrode element groups being positioned proximate respective ones of the second pair of opposite edges of the substrate, each electrode element in the pairs of electrode element groups having a selected effective size along the preselected path, and a selected spacing from an adjacent electrode in the group.

The sensor comprises a plurality of electrical connectors, each of which electrically connects one of the electrodes in the electrode element groups to a selected position on the adjacent resistance element.

Where the sensor is rectangular the first dimension is larger than the second dimension, and there are a greater number of electrode elements in each of the first pair of electrode element groups than in each of the second pair of electrode element groups. The number of the electrodes utilized along an edge of a sensor is generally proportional to the length of that edge. The specific size, number and spacing is selected to compensate for the voltage drop along the resistive element during operation of the sensor. Thus, the actual values are dependent upon the specific resistance of the resistive element to produce the fields in the sensor. The selected voltage necessary to accomplish the optimum linearity can be "fine tuned", if needed, by changing the point at which each of the electrodes is connected to the resistive element. This can be utilized to adjust for any minor inaccuracies that occur during the fabrication techniques in applying small electrodes to exact locations.

The electrodes may be aligned in a straight path. This is only, however, a most general construction. An alternative convex path can be used to match, for example, the aforementioned curvature along the edges of a conventional computer video display. With such a convex path of electrodes such electrodes would be hidden behind the bezel of the display. The effective voltage gradient would be adjusted in the same manner to provide an enlarged linear area.

In a practical embodiment, the sensor according to the invention further comprises a flexible pick-off sheet uniformly spaced from the resistive coating, and proximate thereto, the sheet having a conductive layer facing the resistive coating, and means for preventing inadvertent contact between the conductive layer and the resistive coating but permitting intentional contact therebetween. The flexible sheet can either be a rigid-like plastic such as polyester or polycarbonate or it can be elastomeric. The conductive coating on the pick-off sheet has sufficient flexibility to complement the flexible sheet. Preferably the means for preventing inadvertent contact between said conducting layer of the pick-off sheet and the resistive coating comprises a plurality of small insulating islands attached to the resistive coating and/or to the pick-off sheet. Preferably small insulating islands are as described in U.S. Patent No. 4,220,815. Alternatively the means for preventing inadvertent contact may comprise fibres, insulating wires or other separating means (see, for example U.S. Patent No. 3,798,370). Also the resistive coating on the substrate and the conductive layer on the pick-off sheet may be separated solely by an air gap. The sensor preferably also comprises circuitry connected to the conductive layer of the pick-off sheet for receiving electrical signals generated in the conductive layer, when the conductive layer is touched, to a specific point on the resistive coating, the signals corresponding to coordinates of said specific point.

The sensor according to the invention preferably also comprises circuit means connected to the juncture of ends of adjoining resistance elements, the circuitry providing potentials across appropriate of the resistance elements to produce orthogonal equipotential fields in the resistive coating.

Preferred resistivity values for each of the components (when present) of the sensor are as follows. The resistive coating on the substrate preferably has a resistivity of between about 10 and about 10,000 ohms per square. The resistance elements preferably have a resistance of 6 to 6000 ohms per foot (about 0.2 to 200 ohms per cm). In one particular embodiment the elements have a resistance of about 130 ohms per foot (about 4.27 ohms per cm). The conductive layer on the pick-off sheet preferably has a resistivity of less than 1,000 ohms per square, preferably about 300 ohms per square.

Embodiments of the present invention will now be described by way of example, wherein:

Figure 1 is an exploded view of a device constructed according to the present invention.

Figure 2 is a drawing illustrating one embodiment of the application of electrodes of varying sizes and spacing to achieve the present invention.

Figure 3 is a drawing illustrating the enhancement of the active area of a sensor as achieved with the present invention contrasted with typical sensors of the prior art.

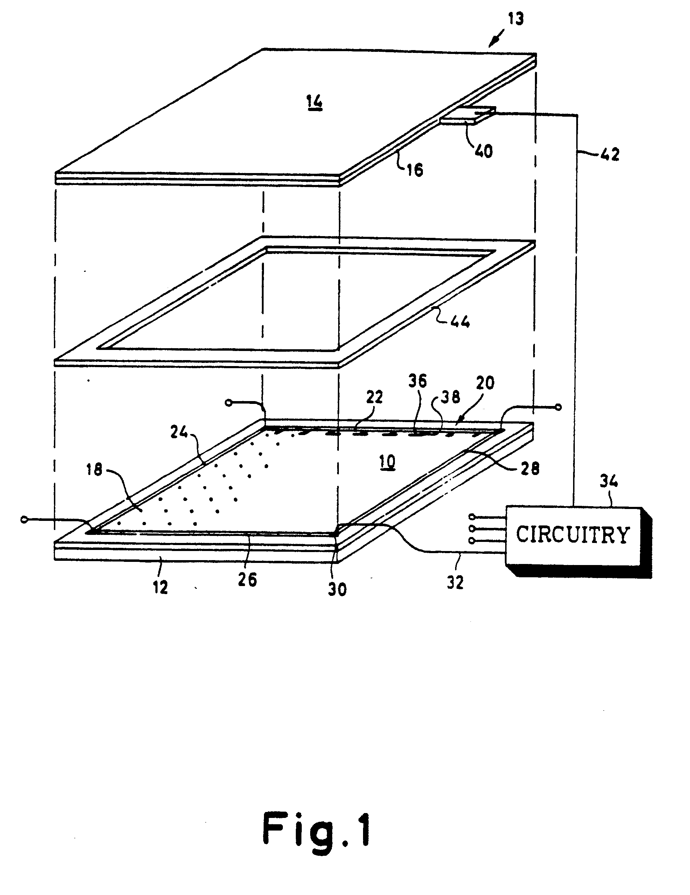

Referring now to Figure 1, shown therein is an exploded view of a transparent device in which the thickness (or height) of the components has been exaggerated for purposes of illustration. A uniform transparent resistive surface 10 comprising indium-tin oxide is applied to a suitable substrate 12. The substrate is planar. The substrate has a rectangular perimeter configuration.

Spaced above the resistive coating is a contact of pick-off sheet 13 comprising a flexible film 14 having a conductive coating 16 on the underside of the film. Since the resultant device is to be transparent, the conductive coating is transparent. The flexible film 14 comprises polyester. The conductive coating 16 has sufficient flexibility to complement the flexible film. It has a sheet resistivity less than about 1,000 ohms per square.

The conductive coating 16 on the pick-off sheet is separated from the resistive surface 10 by means whereby accidental contact therebetween cannot occur. These means do permit, however, intentional contact at a particular point using a preselected finger or stylus pressure applied at that point.

The separating means comprise a plurality of small dots of islands 18 of insulation as described in the aforementioned patent U.S. 4,220,815.

Spaced along each edge of the resistive coating 10, but insulated therefrom, is a resistor element 20 used for applying voltages to the resistive layer 10. The resistor element 20 is continuous and is made up of four components 22, 24, 26 and 28. Adjacent ends of each of the resistor element components 22, 24, 26 and 28 are joined at or near the corners of the resistive coating 10, as at 30. Each of these corners is provided with an electrical lead, such as 32, whereby the device is connected to conventional circuitry 34 which provides the potential to the resistor element 20 and which processes information from the device. The elements of this circuitry are well known to those versed in the art.

Along selected paths adjacent each edge of the resistive coating 10, and in contact therewith, are a plurality of electrodes, as at 36. The size and spacing of the electrodes along each path is chosen so as to achieve varying effective voltage gradients in the resistive coating 10 proximate the electrodes 36 to compensate for the voltage drop along the resistive element. The electrodes 36 are individually connected by a lead, as at 38, to the resistor element 20 along the corresponding edge. Specific potential application to each of the electrodes 36 is achieved by the selection of the connection point of the lead 38 on the resistor element 20 such that the voltage drop along the resistive element is compensated in the desired manner and the increased effective operative area of the sensor is achieved.

An identical array of electrodes is placed along the opposite edge of the resistive layer (not shown in Figure 1). An electrode array is also applied to the other opposite edges, (not shown in Figure 1) this array being identical if the device is square. The electrodes 36 are physically attached to the resistive surface 10 by depositing a conductive material, e.g., silver in the appropriate pattern.

The device also includes an electrode 40, whereby the conductive layer 16 of the aforementioned contact sheet 13 is connected through lead 42 to appropriate external circuitry (as within circuitry 34) for use with the device. The pick-off sheet 13 is joined to the remainder of the device with an insulative adhesive frame 44.

Referring now to Figure 2, shown therein is an electrode configuration for specifically achieving positional accuracy of about ± 0.1 inch throughout the entire active region that approaches the electrodes. The unit produces an active area of 33 cm (13 inches) diagonally. It can be used inter alia on a 33 cm (13 inches) video display screen. The resistive coating 10 has a rectangular configuration for use in this application. The specific sheet resistivity of the coating is about 200 ohms per square. Spaced near the edges of the resistive coating 10, but insulated therefrom, is a resistance element 20 of Nichrome wire of about 2.3 mils diameter, which wire had a linear resistance of about 130 ohms per foot. The sections of the Nichrome wire resistance element 20 are joined at the corners of the unit as at junction 30. The resistance value of the elements immediately adjacent the corners can be adjusted to obtain the proper linearity in the corners of the active area (not shown in Figure 2). The resistance element 20 is made up of the segments 22, 24, 26, and 28. Applied to the resistive coating 10 are a plurality of electrodes 36 positioned and sized so as to be symmetrical about the center lines of the sides of the unit. Each of these electrodes is connected with a lead 38 to the appropriate segments of the resistance element 20, (e.g., 22). Four sizes (lengths) of electrodes are utilized in this embodiment. These electrodes are designated a, b, c, and d in the drawing. As stated above, electrodes of uniform length can be used; however, the elongated electrodes approximates a similar result and reduces the number of connections to the resistive element. The dimensions of these specific electrodes and their approximate spacing are shown in the following table. In addition, the approximate spacing of the electrical leads connecting each of the electrodes to the resistance element 20 are also shown in the table.

## TABLE

| | | | cm | inches | | | cm | inches |
|---|---|---|---|---|---|---|---|---|
| a (length) | = | | 0.15 | 0.06 | k | = | 9.65 | 3.8 |
| b | | = | 0.25 | 0.1 | m | = | 1.27 | 0.5 |
| c | | = | 0.25 | 0.1 | n | = | 2.54 | 1.0 |
| d | | = | 1.27 | 0.5 | o | = | 3.16 | 1.25 |
| e | | = | 0.15 | 0.06 | p | = | 2.03 | 0.8 |
| f | | = | 0.15 | 0.06 | q | = | 4.19 | 1.65 |
| g | | = | 0.15 | 0.06 | r | = | 6.99 | 2.75 |
| h | | = | 1.14 | 0.45 | s | = | 12.7 | 5.0 |
| i | | = | 3.30 | 1.3 | t | = | 2.29 | 0.9 |
| j | | = | 6.35 | 2.5 | u | = | 3.05 | 1.2 |

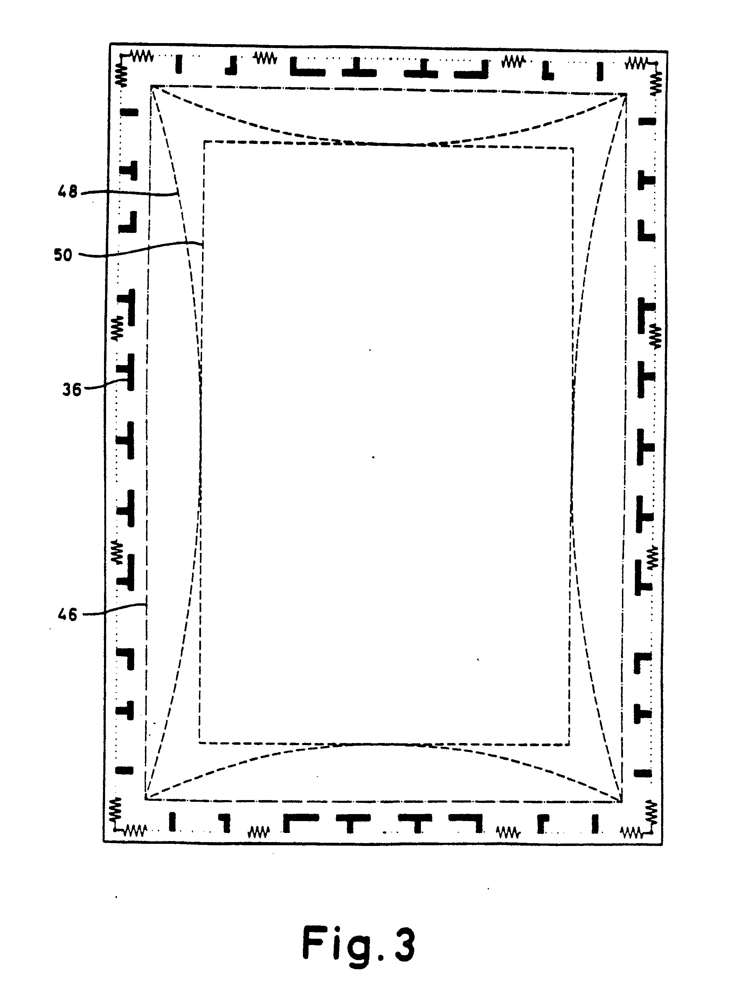

A touch sensor constructed utilizing the electrode configuration identified above was tested for determining positional accuracy (linearity). The unit was constructed as generally illustrated in Figure 1. The conductive layer 16 of the contact or pick-off sheet had a resistivity of 300 ohms per square. It was determined that the resultant sensor and a positional accuracy of about ± 0.1 inch through the entire active or operational region of the sensor, with the active area approaching the electrodes. The result may be contrasted with results using the bowed orientation of electrodes as set forth in the aforementioned U.S. Patent Ho. 3,798,370. In that construction and using the resistance discussed herein, there was a bow in the electrode configuration of about 4.45 cm (1.75 inches) in the long dimension of the sensor and almost a 2.54 cm (1 inch) bow in the shorter dimension. The amount of bow is proportional to the ratio of the resistance of the wire (or its equivalent) divided by the resistance of the sheet, multiplied by the square of the length of the side. Thus, for the same size of total sensor structure of the prior art it would have a reduced effective active area as demonstrated by the present invention. This comparison is illustrated in Figure 3. The active area of the present invention is indicated by the dashed line 46. Without this invention, there would be a bow as indicated at 48, and the active area would be defined by the dashed rectangle 50.

EP 0 186 464 B1

**Claims**

1. A position touch sensor which comprises:
(i) a substrate (12);
(ii) a uniform resistive coating (10) applied to and covering a substantial portion of the upper face of the substrate;
(iii) resistance elements (22, 24, 26, 28) positioned proximate each of the perimeter edges of the coating (10), for applying orthogonal fields to the resistive coating, each of the ends of the resistance elements being joined to proximate ends of the adjacent resistance elements, the resistance elements being insulated from the resistive coating (10); and
(iv) a plurality of electrodes (36)
(a) positioned along a preselected path along each perimeter edge of the coating, and
(b) electrically attached to the coating, each of the elctrodes (36) being electrically connected to selected positions along the resistance elements and having a selected effective size and centre-to-centre spacing along the preselected path; characterised in that the selected spacing between adjacent electrodes (36) along each pre-selected path decreases from each end of the pre-selected path toward the centreline of the path so as to compensate for the voltage drop along the resistance elements (22, 24, 26, 28) during operation of the sensor when said orthogonal fields are applied to said coating (10).

2. A sensor according to claim 1, wherein the selected effective size of the electrodes in each of the preselected paths effectively increases from each end of the path toward a centreline of the path.

3. A sensor according to any preceding claim, wherein the preselected paths are straight lines, or symmetrical convex curves.

4. A sensor according to any preceding claim, wherein
(a) the substrate is rectangular, having a first pair of opposite edges of a first dimension and a second pair of opposite edges of a second dimension at substantially right angles to said first pair of edges;
(b) two pairs of resistance elements are provided with each of the first pair of resistance elements being positioned proximate respective ones of the first pair of opposite edges of the substrate, and each of the second pair of resistance elements being positioned proximate respective ones of the second pair of opposite edges of said substrate, adjacent ends of the pairs of resistance elements being joined to form a substantially rectangular array of resistance elements surrounding the resistive coating;
(c) the plurality of electrodes comprises two pairs of electrode element groups each electrode element group of the first pair of electrode element group being positioned proximate respective ones of the first pair of opposite edges of the substrate, and each electrode element in the second pair of electrode element groups being positioned proximate respective ones of the second pair of opposite edges of the substrate, each electrode element in the pairs of electrode element groups having a selected effective size along the preselected path, and the selected spacing from an adjacent electrode in the group.

5. A sensor according to claim 4, further comprising a plurality of electrical connectors, each of which electrically connects one of the electrodes in the electrode element groups to a selected position on the adjacent resistance element.

6. A sensor according to claim 4 or 5, wherein the first dimension is larger than the second dimension, and wherein there are a greater number of electrode elements in each of the first pair of electrode element groups than in each of the second pair of electrode element groups.

7. A sensor according to claim 2 or any claim dependent thereon, wherein the selected effective size of the electrodes in each of the selected paths increases from about 0.15 cm (0.06 inch) at each end of the path to about 1.27 cm (.5 inch) at the centreline of the path, with said electrodes having a dimension perpendicular to the path of about 0.15 cm (0.06 inch).

8. A sensor according to any preceding claim, wherein the selected centre-to-centre spacing of the

7

electrodes in each of the preselected paths decreases from about 3.30 cm (1.3 inches) at each end of the path to about 2.03 cm (0.8 inch) at the centreline of the path.

9. A sensor according to any preceding claim, further comprising a flexible pick-off sheet uniformly spaced from the resistive coating, and proximate thereto, the sheet having a conductive layer facing the resistive coating, and means for preventing inadvertent contact between the conductive layer and the resistive coating but permitting intentional contact therebetween.

10. A sensor according to claim 9, further comprising circuitry connected to the conductive layer of the pick-off sheet for receiving electrical signals generated in the conductive layer, when the conductive layer is touched, to a specific point on the resistive coating, the signals corresponding to coordinates of said specific point.

11. A sensor according to any preceding claim, further comprising circuit means connected to the juncture of ends of adjoining resistance elements, the circuitry providing potentials across appropriate of the resistance elements to produce orthogonal equipotential fields in the resistive coating.

**Revendications**

1. Capteur tactile de position qui comporte :
   (i) un substrat (12) ;
   (ii) un revêtement resistif uniforme (10) appliqué sur et recouvrant une partie importante de la face supérieure du substrat ;
   (iii) des éléments (22, 24, 26, 28) à résistance placés à proximité de chacun des bords périphériques du revêtement (10), pour appliquer des champs orthogonaux au revêtement résistif, chacune des extrémités des éléments à résistance étant reliée à des extrémités proches d'éléments à résistance adjacents, les éléments à résistance étant isolés du revêtement résistif (10) ; et
   (iv) plusieurs électrodes (36)
   (a) positionnées le long d'un trajet préalablement choisi le long de chaque bord périphérique du revêtement, et
   (b) reliées électriquement au revêtement, chacune des électrodes (36) étant connectée électriquement en des positions choisies le long des éléments à résistance et ayant une dimension utile choisie et un espacement entre centres choisi le long du trajet préalablement choisi ;
   caractérisé en ce que l'espacement choisi entre les électrodes adjacentes (36) le long de chaque trajet préalablement choisi décroît à partir de chaque extrémité du trajet préalablement choisi vers l'axe central du trajet afin de compenser la chute de tension le long des éléments (22, 24, 26, 28) durant le fonctionnement du capteur lorsque lesdits champs orthogonaux sont appliqués audit revêtement (10).

2. capteur selon la revendication 1, dans lequel la dimension utile choisie des électrodes dans chacun des trajets préalablement choisis augmente progressivement depuis chaque extrémité du trajet vers un axe central du trajet.

3. Capteur selon l'une des revendications précédentes, dans lequel les trajets préalablement choisis sont des lignes droites, ou des courbes convexes symétriques.

4. Capteur selon l'une quelconque des revendications précédentes, dans lequel
   (a) le substrat est rectangulaire, comportant une première paire de bords opposés d'une première dimension et une seconde paire de bords opposés d'une seconde dimension, sensiblement à angles droits avec ladite première paire de bords ;
   (b) deux paires d'éléments à résistance sont prévues, chaque élément à résistance de la première paire étant placée à proximité de certains, respectifs, des bords opposés de la première paire du substrat, et chacun des éléments à résistance de la seconde paire étant placé à proximité de certains, respectifs, des bords opposés de la seconde paire dudit substrat, des extrémités adjacentes des paires d'éléments à résistance étant reliées pour former un ensemble sensiblement rectangulaire d'éléments à résistance entourant le revêtement résistif ;
   (c) les diverses électrodes comprennent deux paires de groupes d'éléments à électrodes, chacun des groupes d'éléments à électrodes de la première paire de groupes d'éléments à électrodes étant

8

placé à proximité de certains, respectifs, des bords opposés de la première paire du substrat, et chaque élément à électrode dans la seconde paire du groupe d'éléments à électrodes étant placé à proximité de certains, respectifs, des bords opposés de la seconde paire du substrat, chaque élément à électrode dans les paires de groupes d'éléments à électrodes ayant une dimension effective choisie le long du trajet préalablement choisi, et l'espacement choisi à partir d'une électrode adjacentce dans le groupe.

5. Capteur selon la revendication 4, comportant en outre plusieurs connecteurs électriques qui connectent chacun électriquement une des électrodes de groupes d'éléments à électrodes à une position choisie sur l'élément à résistance.

6. Capteur selon la revendication 4 ou 5, dans lequel la première dimension est plus grande que la seconde dimension, et dans lequel il y a un plus grand nombre d'éléments à électrodes dans chacun des groupes d'éléments à électrodes de la première paire que dans chacun des groupes d'éléments à électrodes de la seconde paire.

7. Capteur selon la revendication 2 ou l'une quelconque des revendications qui en dépendent, dans lequel la dimension utile choisie des électrodes dans chacun des trajets choisis augmente d'environ 0,15 cm (0,06 inch) à chaque extrémité du trajet jusqu'à environ 1,27 cm (0,5 inch) à l'axe central du trajet, lesdites électrodes ayant une dimension, perpendiculaire au trajet, d'environ 0,15 cm (0,06 inch).

8. Capteur selon l'une quelconque des revendications précédentes, dans lequel l'espacement choisi entre centres des électrodes dans chacun des trajets préalablement choisis décroît d'environ 3,30 cm (1,3 inch) à chaque extrémité du trajet jusqu'à environ 2,03 cm (0,8 inch) à l'axe central du trajet.

9. Capteur selon l'une quelconque des revendications précédentes, comprenant en outre une feuille flexible de captage espacée uniformément du revêtement résistif et proche de celui-ci, la feuille comportant une couche conductrice faisant face au revêtement résistif, et des moyens destinés à empêcher un contact accidentel entre la couche conductrice et le revêtement résistif, mais permettant un contact intentionel entre eux.

10. Capteur selon la revendication 9, comprenant en outre un circuit connecté à la couche conductrice de la feuille de captage pour recevoir des signaux électriques générés dans la couche conductrice, lorsque la couche conductrice est touchée, en un point spécifique sur le revêtement résistif, les signaux correspondant à des coordonnées dudit point spécifique.

11. Capteur selon l'une quelconque des revendications précédentes, comportant en outre des moyens à circuits connectés à la jonction d'extrémités d'éléments à résistance contigus, le circuit appliquant des potentiels à travers certains, appropriés, des éléments à résistance pour produire des champs équipotentiels orthogonaux dans le revêtement résistif.


**Ansprüche**

1. Berührungs-Lagesensor, der folgendes aufweist:
   (i) ein Substrat (12);
   (ii) eine gleichmäßige Widerstandsbeschichtung (10), die auf einen wesentlichen Bereich der Oberfläche des Substrats aufgebracht ist und diesen bedeckt;
   (iii) Widerstandselemente (22, 24, 26, 28) , die jeweils in der Nähe von den jeweiligen äußeren Begrenzungsrändern der Beschichtung (10) angeordnet sind und die orthogonale Felder in der Widerstandsbeschichtung bilden, wobei jedes der Enden der Widerstandselemente mit den nächstgelegenen Enden der benachbarten Widerstandselemente verbunden ist, wobei die Widerstandselemente gegenüber der Widerstandsbeschichtung (10) isoliert sind; und
   (iv) eine Vielzahl von Elektroden (36), die
   (a) entlang einer vorgewählten Bahn längs jedes Begrenzungsrandes der Beschichtung angeordnet sind und
   (b) an der Beschichtung elektrisch angebracht sind, wobei jede der Elektroden (36) an gewählte Positionen entlang den Widerstandselementen elektrisch angeschlossen ist und eine gewählte wirksame Größe sowie einen gewählten Mittelpunktsabstand entlang der vorgewählten Bahn hat; dadurch gekennzeichnet, daß der gewählte Abstand zwischen benachbarten Elektroden (36) entlang jeder vorgewählten Bahn von jedem Ende der vorgewählten Bahn zur Mittellinie der Bahn abnimmt, um den Spannungsabfall entlang den Widerstandselementen (22, 24, 26, 28) während des Betriebes des Sensors zu kompensieren, wenn die orthogonalen Felder auf die Beschichtung (10) aufgebracht sind.

2. Sensor nach Anspruch 1, wobei die gewählte wirksame Größe der Elektroden in jeder der vorgewählten Bahnen von jedem Ende der Bahn zu einer Mittellinie der Bahn wirksam zunimmt.

3. Sensor nach einem der vorhergehenden Ansprüche, wobei die vorgewählten Bahnen gerade Linien oder symmetrische konvexe Kurven sind.

4. Sensor nach einem der vorhergehenden Ansprüche, wobei
(a) das Substrat rechteckig ist und ein erstes Paar von gegenüberliegenden Rändern mit einer ersten Abmessung und ein zweites Paar von gegenüberliegenden Rändern mit einer zweiten Abmessung aufweist, die im wesentlichen rechtwinklig zu dem ersten Paar von Rändern verlaufen;
(b) zwei Paare von Widerstandselementen vorgesehen sind, wobei jedes Widerstandselement des ersten Paares von Widerstandselementen in der Nähe der jeweiligen Ränder des ersten Paares von gegenüberliegenden Rändern des Substrates positioniert ist und jedes Widerstandselement des zweiten Paares von Widerstandselementen in der Nähe der jeweiligen Ränder des zweiten Paares von gegenüberliegenden Rändern des Substrats positioniert ist, wobei benachbarte Enden der Paare von Widerstandselementen miteinander verbunden sind und eine im wesentlichen rechteckige Anordnung von Widerstandselementen bildet, die die Widerstandsbeschichtung umgeben;
(c) eine Vielzahl von Elektroden zwei Paare von Elektrodenelementgruppen umfaßt, wobei jede Elektrodenelementgruppe des ersten Paares von Elektrodenelementgruppen in der Nähe von den jeweiligen Rändern des ersten Paares von gegenüberliegenden Rändern des Substrats positioniert ist und jede Elektrodenelementgruppe des zweiten Paares von Elektrodenelementgruppen in der Nähe von den jeweiligen Rändern des zweiten Paares von gegenüberliegenden Rändern des Substrats positioniert ist, wobei jedes Elektrodenelement der Paare von Elektrodenelementgruppen eine gewählte wirksame Größe entlang der vorgewählten Bahn und den gewählten Abstand von einer benachbarten Elektrode in der Gruppe hat.

5. Sensor nach Anspruch 4, ferner umfassend eine Vielzahl von elektrischen Verbindern, von denen jeder eine der Elektroden der Elektrodenelementgruppen mit einer gewählten Position auf dem benachbarten Widerstandselement elektrisch verbindet.

6. Sensor nach Anspruch 4 oder 5, wobei die erste Abmessung größer als die zweite Abmessung ist und wobei eine größere Anzahl von Elektrodenelementen in jeder Elektrodenelementgruppe des ersten Paares von Elektrodenelementgruppen vorgesehen ist als in jeder Elektrodenelementgruppe des zweiten Paares von Elektrodenelementgruppen.

7. Sensor nach Anspruch 2 oder einem darauf rückbezogenen Anspruch, wobei die gewählte wirksame Größe der Elektroden in jeder der gewählten Bahnen von etwa 0,15 cm (0.06 inch) an jedem Ende der Bahn auf etwa 1,27 cm (0`5 inch) an der Mittellinie der Bahn zunimmt, wobei die Elektroden senkrecht zu der Bahn eine Abmessung von etwa 0,15 cm (0.06 inch) haben.

8. Sensor nach einem der vorhergehenden Ansprüche, wobei der gewählte Mittelpunktsabstand der Elektroden in jeder der vorgewählten Bahnen von etwa 3,30 cm (1,3 inch) an jedem Ende der Bahn auf etwa 2,03 cm (0,8 inch) an der Mittellinie der Bahn abnimmt.

9. Sensor nach einem der vorhergehenden Ansprüche, der weiterhin folgendes aufweist: einen flexiblen Abgriff-Flächenkörper, der gleichmäßig von der Widerstandsbeschichtung beabstandet und in der Nähe von dieser angeordnet ist, wobei der Flächenkörper eine der Widerstandsbeschichtung zugewandte leitfähige Schicht hat, und eine Einrichtung, die einen ungewollten Kontakt zwischen der leitfähigen Schicht und der Widerstandsbeschichtung verhindert, aber beabsichtigten Kontakt zwischen diesen ermöglicht.

EP 0 186 464 B1

**10.** Sensor nach Anspruch 9, der weiterhin folgendes aufweist: eine mit der leitfähigen Schicht des Abgriff-Flächenkörpers verbundene Schaltungsanordnung, um elektrische Signale zu empfangen, die in der leitfähigen Schicht erzeugt werden, wenn diese mit einem bestimmten Punkt auf der Widerstandsbeschichtung in Kontakt gebracht wird, wobei die Signale den Koordinaten dieses bestimmten Punktes entsprechen.

**11.** Sensor nach einem der vorhergehenden Ansprüche, der weiterhin folgendes aufweist: eine an den Verbindungspunkt von Enden von benachbarten Widerstandselementen angeschlossene Schaltungseinrichtung, wobei die Schaltungsanordnung Potentiale an geeignete Widerstandselemente anlegt, um orthogonale Äquipotentialfelder in der Widerstandsbeschichtung zu erzeugen.

11

Fig.1

Fig. 2

# Fig. 3